Europäisches Patentamt

European Patent Office

Office européen des brevets

(11) Publication number: **0 059 809**
**B1**

# EUROPEAN PATENT SPECIFICATION

(45) Date of publication of patent specification: **13.03.85**

(21) Application number: **81304578.8**

(22) Date of filing: **02.10.81**

(51) Int. Cl.⁴: **B 01 D 29/00, B 01 D 35/00, B 01 D 23/28**

(54) Disposable filtration unit with recoverable filter.

(30) Priority: **02.03.81 US 238152**

(43) Date of publication of application:
**15.09.82 Bulletin 82/37**

(45) Publication of the grant of the patent:
**13.03.85 Bulletin 85/11**

(84) Designated Contracting States:
**BE CH DE FR GB IT LI LU NL SE**

(56) References cited:
**CH-A- 548 954**
**US-A-3 085 609**
**US-A-3 295 686**
**US-A-4 113 627**

(73) Proprietor: **SYBRON CORPORATION**
**1100 Midtown Tower**
**Rochester, NY 14604 (US)**

(72) Inventor: **Mehra, Ravinder C.**
**One Crow Hill Drive**
**Fairport New York (US)**
Inventor: **Relyea, Robert G.**
**1669 New Michigan Road**
**Canandaigua New York (US)**
Inventor: **Baird, Peter K.**
**21 Teakwood Lane**
**Fairport New York (US)**

(74) Representative: **Oliver, Roy Edward et al**
**POLLAK MERCER & TENCH High Holborn House**
**52-54 High Holborn**
**London WC1V 6RY (GB)**

## Description

The present invention relates generally to a disposable filtration unit with a recoverable filter membrane, for use in laboratory work and the like. In particular, the present invention relates to such a unit wherein the filter membrane is quickly and easily recoverable.

Disposable filtration units are well known in the art. One such unit, for example, is identified in US—A—3 295 686. Generally, the unit described in this document is a disposable filter which is supplied to the user in a sterile package ready for use, wherein the filter membrane is sandwiched between component parts of the unit. These component parts are permanently fixed together by cementing or ultrasonic welding, so that an airtight seal is formed about the periphery to prevent leakage of air into the unit at a point downstream of the filter membrane.

Other disposable filtration units of this type have the filter membrane permanently afixed by cementing or by sonic welding to one element of the unit.

Another type of disposable filtration unit is disclosed in US—A—3 085 689 but in this prior art unit two housings are rotated together in locked engagement.

While such units are appropriate in cases where the user is interested in recovering the filtrate, such units are not suitable in cases where the user is interested in recovering the material filtered from the liquid. In this respect, the construction of disposable units of the prior art does not facilitate removal of the filter membrane. With these prior art units, attempts to recover the filter membrane often result in a destruction of the filter membrane and the loss of some of the material which the user desires to recover.

Generally speaking, therefore, the prior art disposable filtration units each comprise: a receptacle for receiving filtrate; a support plate fixed in airtight connection at the upper end of the receptacle and having at least one opening therethrough; a filter membrane on the support plate; an open-ended shell for receiving a liquid to be filtered, the shell having a lower end portion extending into the upper end of the receptacle and against the support plate and filter membrane; and seal means between the lower end of the shell and support plate.

A disposable filtration unit, with a recoverable filter membrane and in accordance with the present invention, is characterised from the prior art units by breakaway means which connects the lower end of the shell to the upper end of the receptacle at spaced intervals about the periphery thereof, which is the sole attachment of the shell to the receptacle and which provides weakened rupture points permitting separation of the shell and receptacle for recovery of the filter membrane.

Said breakaway means may comprise vertical ribs extending between the shell and receptacle. In one embodiment, the receptacle has an upstanding rim into which extends a necked lower end portion formed integrally with the shell, with vertical ribs, which are shorter than the necked portion and fixed to the top edge of the ring at spaced intervals about the outer periphery of the necked portion forming said breakaway means and connecting the shell to the receptacle. Preferably, the ribs are formed integrally with the necked lower end portion. Also, the shell may have a bifurcated lower end defining an inner foot, an outer foot and an intermediate groove, with the inner foot being adapted to press the filter membrane against the support plate and with the outer foot being adapted to press the seal means against the support plate.

Advantageously, the seal means is a flat gasket which has a projecting band upstanding from the upper surface thereof and being wider than the groove, so as to provide an interference fit whereby the gasket remains attached to the shell when the latter is broken away and removed from the receptacle. In such an arrangement, the flat gasket may also have a rib which projects downwardly from the lower face thereof, is located beneath the inner foot and extends around the gasket adjacent the inner periphery thereof. Also, the support plate can be larger in diameter than the filter membrane, so that the outer edge of the support plate extends outwardly from under the membrane, with the flat gasket having its inner periphery overlying the membrane and its outer periphery overlying the outer edge of the support plate. Furthermore, the support plate may be provided with an upstanding tongue which is arranged to be received in the intermediate groove defined by the bifurcated lower end of the shell, with the tongue and receptacle defining an annular space therebetween, with the seal means being in that space and with the outer foot extending into the space and engaging the seal means for effecting an airtight seal between the shell and support plate. Additionally, the support plate can have an upstanding lip which is spaced outwardly from the tongue, with the lip and tongue defining a channel therebetween for receiving the seal means and the outer foot extending into the channel. Preferably, the tongue is taller than the lip and the channel communicates with the space between the receptacle and tongue.

Embodiments of the invention will now be described by way of example and with reference to the accompanying drawings, in which:

Figure 1 is a side elevation, partly broken away and in section, showing one embodiment of disposable filtration unit;

Figure 2 is a view, on an enlarged scale, showing a portion of the filtration unit of Fig. 1; and

Figures 3 and 4 are views similar to Figure 2 only showing other embodiments of the unit.

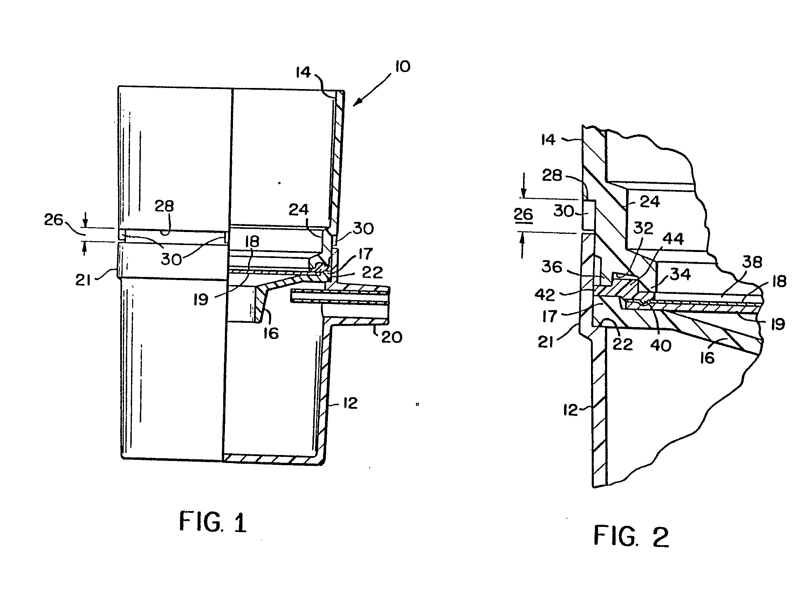

Referring to the drawings, Figure 1 shows a disposable filtration unit generally indicated at 10, including a lower cup-shaped receptacle 12 for receiving the filtrate and an upper open-ended hollow shell 14 for receiving the liquid to be filtered. The receptacle has a spout 20 which serves both as a connector for attachment of a vacuum line and as a pouring spout for filtrate received into the receptacle.

Disposed between the shell and receptacle is a generally funnel shaped support plate 16. The support plate 16 has an upstanding outer rim 17 which surrounds a sheet of filter material 18 and a support pad 19 laid on the support plate (Figure 2).

As shown in Figure 1 and 2, the upper end of the receptacle 12 has a rim 21 which forms an internal shoulder 22. Support plate 16 is carried on this shoulder as a customary in the art. The support plate can be permanently attached to the receptacle by a suitable cement or by ultrasonic welding to provide an airtight connection between the receptacle and support plate.

The lower end of shell 14 has a necked portion 24 so that it can be received into receptacle rim 21. The axial length of necked portion 24 and its position within rim 21 is such that there is some axial distance, indicated at 26, between the top of the receptacle rim and an edge 28 of the necked portion.

Formed integral shell 14 at spaced intervals about the necked portion are a plurality of vertical ribs 30. The length of these ribs are sufficient to bridge the distance 26 as shown in Figure 1. These ribs can be attached to the upper end of receptacle rim 21 by any suitable means such as ultrasonic welding so as to fix shell 14 to the receptacle. Because the attachment of ribs 30 to the receptacle occurs only at spaced intervals about the periphery of the receptacle, it should be appreciated that these ribs 30 provide weak "breakaway" points so as to facilitate removal of the shell from the receptacle.

Figure 2 shows in greater detail the connection between the breakaway shell and the receptacle. The lower end portion of shell 14 is bifurcate, having a groove 32 which divides the lower end of the shell into an inner foot 34 and an outer foot 36 for purposes explained hereinbelow.

Disposed between the lower end face of shell 14 and support plate 16 is a flat, annular gasket 38. The inner periphery of this gasket overlies the filter membrane 18 and the outer periphery rests on the support plate rim 17. The gasket is pressed against rim 17 of the support plate 16 and against filter membrane 18 by the bifurcate lower end of shell 14. In this way the gasket 38 provides two seals. The first seal is a liquid tight seal between shell 14 and filter membrane 18 which prevents liquid in the reservoir from being drawn around and beneath the edge of the filter membrane and into receptacle 12. This first seal is made more effective by an annular rib 40 on the gasket which is pressed into and against the filter membrane 18 by the inner foot 34 of shell 14.

The second seal is an air tight seal between shell 14 and support plate 16 which prevents air from being drawn under the outer edge of the gasket. This second seal is made effective by having the outer foot 36 of the shell pressing the outer periphery 42 of the gasket against the rim 17 of the support plate.

Between the gasket rib 40 and the outer periphery 42 of the gasket, is an upstanding band 44 of gasket material. This upstanding band is received in groove 32 and is slightly wider than the groove as to provide an interference fit. With this arrangement the gasket 18 is interlocked with shell and will remain attached to the shell when the shell is broken away and removed from receptacle 12.

To manufacture the filtration unit of the present invention the separate components, namely the receptacle 12, shell 14 and support plate 16, are separately molded as by injection molding. Gasket 38 is also molded from an appropriate gasket material such as thermoplastic elastomer or silicone rubber. Support plate 16 is then attached to the receptacle and against shoulder 22 by cementing, sonic welding or other suitable means. Thereafter, the filter membrane 18 and, if desired, the pad 19 are placed on support plate 16. The shell, with gasket 38 already attached to the lower end of the shell, is then placed in position by inserting the necked portion 24 of the shell into the receptacle rim 21. This simultaneously clamps the filter sheet to the support plate and compresses the gasket material to effect the two seals as described above. With the shell held in this position ribs 30 are attached as by sonic welding to the upstanding end of the receptacle rim 21.

In use the liquid to be filtered is simply poured into the hollow shell 14 and the filtrate collected in receptacle 12. If desired air can be evacuated from the receptacle to speed the filtration process by attaching a vacuum line to spout 20. After the liquid has been filtered the hollow shell is simply broken away from the receptacle, the attachment of ribs 30 to the receptacle being weak, "breakaway" points which makes it easy to remove the shell from the receptacle. Due to the interference fit between the band 44 of gasket material and groove 32 in the end face of shell 14, the gasket 38 is held to the shell and is removed together with the shell to expose the filter sheet 18. With the shell and gasket removed, the filter membrane 18 can be lifted off of the support pad in order to collect or work on the material filtered from the liquid.

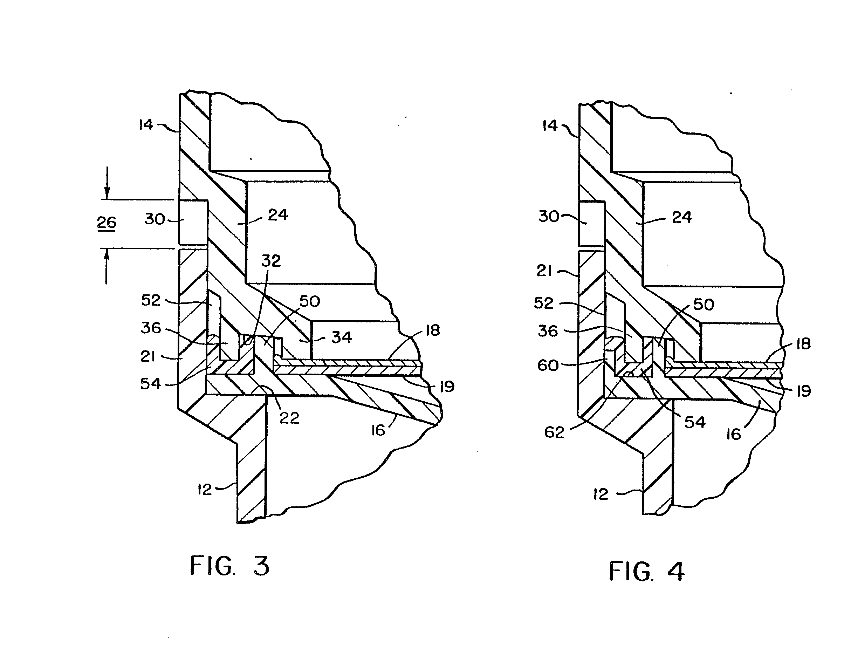

Alternative forms of the invention are shown in Figures 3 and 4, it being understood that parts similar to those shown in Figures 1 and 2 are identified with the same reference numeral. In the embodiments shown in Figures 3 and 4, the support plate 16 takes a slightly different form to accommodate an alternative sealing arrangement which does not utilize a formed gasket 38 as shown in the preferred embodiment of Figures 1 and 2.

Figure 3 shows that support plate 16 has an upstanding tongue 50 spaced radially inwardly from receptacle rim 21 so the rim and tongue 50 define a space 52 therebetween. Prior to the assembly of shell 14 to the receptacle, a suitable liquid gasket material 54 such as an RTV Silicone or the like is put into space 52.

Upon assembly of the shell to the receptacle, tongue 50 is received into the groove 32 so that the outer foot 36 of the shell extends into the gasket material 54. This displaces sufficient gasket material so that an airtight seal is formed between the shell and support plate which prevents air leaking into the receptacle downstream from filter membrane 18.

The inner foot 34 of the shell presses directly on filter membrane 18 to clamp its periphery to support plate 16.

An alternative construction is shown in Figure 4. In this embodiment the support plate 16 has an upstanding peripheral lip 60 in addition to tongue 50. Lip 60 and tongue 50 define the sidewalls of a channel 62 for receiving the gasket material. It should be appreciated that in this embodiment tongue 50 is higher than lip 60. This ensures that when the shell is attached to the receptacle the gasket material is not squeezed around tongue 50 so as to contact the filter sheet 18. Instead, the gasket material is squeezed over the lower lip 60 and into the space 52 between the necked portion 24 of the shell and the receptacle rim 21. In the absence of lip 60 as shown in the Figure 4 embodiment, gasket material 54 simply is squeezed around the outer foot 36 of the shell and into the space between the necked portion of the shell and the receptacle rim.

Thus, it should be appreciated that the present invention provides a filter unit which permits easy recovery of the filter membrane. The unit is easily manufactured and designed to be a one-use disposable item in that the separation of the shell from the receptacle at the "break-away" points prevents reuse of the unit.

**Claims**

1. A disposable filtration unit (10) having a recoverable filter membrane (18) comprising:
   a) a receptacle (12) for receiving filtrate;
   b) a support plate (16) fixed in airtight connection to the upper end of the receptacle (12) and having at least one opening therethrough;
   c) a filter membrane (18) on the support plate (16);
   d) an open-ended shell (14) for receiving a liquid to be filtered, the shell (14) having a lower end portion extending into the upper end of the receptacle (12) and against the support plate (16) and filter membrane (18);
   e) seal means (38) between the lower end of the shell (14) and support plate (16); and characterized by
   f) breakaway means which connects the lower end of the shell (14) to the upper end of the receptacle (12) at spaced intervals about the periphery thereof, which is the sole attachment of the shell (14) to the receptacle (12) and which provides weakened rupture points permitting separation of the shell (14) and receptacle (12) for recovery of the filter membrane (18).

2. A filtration unit (10) as claimed in claim 1, characterized in that said breakaway means comprises vertical ribs (30) extending between the shell (14) and receptacle (12).

3. A filtration unit (10) as claimed in claim 2, characterized in that
   a) the upper end of the receptacle (12) has an upstanding rim (21);
   b) the lower end of the shell (14) has a necked portion (24) extending into the rim (21); and
   c) the verical ribs (30) spaced at intervals about the outer periphery of the necked portion (24) are shorter than the necked portion (24) and are fixed to the top edge of the rim (21) for connecting the shell (14) to the receptacle (12).

4. A filtration unit (10) as claimed in claim 2 or 3, characterized in that the ribs (30) are formed integrally with the lower end portion (24).

5. A filtration unit (10) as claimed in any preceding claim, characterised in that the shell (14) has a bifurcated lower end defining an inner foot (34), an outer foot (36) and an intermediate groove (32),
   i) the inner foot (34) being adapted to press the filter membrane (18) against the support plate (16), and
   ii) the outer foot (36) being adapted to press said seal means (38) against the support plate (16).

6. A filtration unit (10) as claimed in claim 5, characterized in that the said seal means is a flat gasket (38) having a projecting band (44) upstanding from the upper surface thereof into the groove (32), the band (44) being wider than the groove (32) so as to provide an interference fit, whereby the gasket (38) remains attached to the shell (14) when the latter is broken away and removed from the receptacle (12).

7. A filtration unit (10) as claimed in claim 6, characterized in that the flat annular gasket (38) also has a rib (40) projecting downwardly from the lower face thereof, being located beneath the inner foot (34) and extending around the gasket (38) adjacent the inner periphery thereof.

8. A filtration unit (10) as claimed in claim 6 or 7, characterized in that
   i) the support plate (16) is larger in diameter than the filter membrane (18) so that the outer edge of the support plate (16) extends outwardly from under the filter membrane; and
   ii) the flat gasket (38) has its inner periphery overlying the filter membrane (18) and its outer periphery overlying the outer edge of the support plate (16)

9. A filtration unit (10) as claimed in claim 5, characterized by an upstanding tongue (50) on the support plate (16) arranged to be received in the groove (32), the tongue (50) and the upper end of the receptacle (12) defining an annular space (52) therebetween, with the seal means (54) being in the space (52) and the outer foot (36) extending into the space (52) and engaging the seal means (54) for effecting an airtight seal between the shell (14) and support plate (16) (figure 3).

10. A filtration unit (10) as claimed in claim 9, characterized in that the support plate (16) has an upstanding lip (60) spaced outwardly from the tongue (50), the lip (60) and tongue (50) defining a channel (62) therebetween for receiving said seal means (54), with the outer foot (36) extending into the channel (62) to effect an airtight seal between the shell (14) and support plate (16) (figure 4).

11. A filtration unit (10) as claimed in claim 10, characterized in that the tongue (50) is taller than the lip (60).

12. A filtration unit (10) as claimed in claim 10 or 11, characterized in that the channel (62) communicates with the space (52) between the upper end of the receptacle (12) and tongue (50).

**Patentansprüche**

1. Wegwerffilter (10) mit einer rekuperierbaren Filtermembran (18), die aus einem Behälter (12) zur Aufnahme eines Filtrates, einer in luftdichter Verbindung mit dem oberen Abschnitt des Behälters (12) stehenden Stützplatte (16), die wenigstens eine durchgehende Öffnung aufweist, einer auf der Stützplatte (16) befindlichen Filtermembran (18), einem offenen Gehäuse (14) zur Aufnahme einer zu filtrierenden Flüssigkeit, das einen unteren, sich in den oberen Endabschnitt des Behälters (12) hineinerstreckenden sowie an der Stützplatte (16) und der Filtermembran (18) anliegenden unteren Abschnitt aufweist, und aus Dichtungsmitteln (38) zwischen dem unteren Abschnitt des Gehäuses (14) und der Stützplatte (16) besteht, gekennzeichnet durch Abreißmittel, welche den unteren Abschnitt des Gehäuses (14) mit dem oberen Abschnitt des Behälters (12) verbinden und dabei mit Abstand entlang dessen Umfang angeordnet sind, wobei diese Abreißmittel die einzige Verbindung zwischen dem Gehäuse (14) und dem Behälter (12) darstellen, so daß geschwächte Abreißpunkte gegeben sind, welche eine Trennung des Gehäuses (14) und des Behälters (12) voneinander zwecks Wiedergewinnung der Filtermembran (18) ermöglichen.

2. Wegwerffilter (10) nach Anspruch 1, dadurch gekennzeichnet, daß die Abreißmittel aus vertikalen Rippen (30) bestehen, die sich zwischen dem Gehäuse (14) und dem Behälter (12) erstrecken.

3. Wegwerffilter (10) mach Anspruch 2, dadurch gekennzeichnet, daß der obere Abschnitt des Behälters (12) einen nach außen umgebogenen und sich nach oben erstreckenden Rand (21) aufweist, daß der untere Abschnitt des Gehäuses (14) einen eingezogenen Abschnitt (24) aufweist, der sich in den Rand (21) hineinerstreckt und daß die vertikal verlaufenden, mit Abstand auf dem äußeren Umfang des eingezogenen Abschnitts (24) angeordneten Rippen (30) kürzer als der eingezogene Abschnitt (24) ausgebildet und zur Verbindung des Gehäuses (14) mit dem Behälter (12) auf der oberen Kante des Randes (21) befestigt sind.

4. Wegwerffilter (10) nach Anspruch 2 oder 3, dadurch gekennzeichnet, daß die Rippen (30) einstückig mit dem unteren Abschnitt (24) ausgebildet sind.

5. Wegwerffilter (10) nach einem der vorangegangenen Ansprüche, dadurch gekennzeichnet, daß das Gehäuse (14) einen gabelartig aufgespaltenen unteren Endabschnitt aufweist, durch welchen eine innere Basis (34), eine äußere Basis (36) und eine dazwischenliegende Rille (32) gebildet werden, wobei die innere Basis (34) zur Anpressung der Filtermembran (18) gegen die Stützplatte (16) ausgebildet ist und wobei die äußere Basis (36) zur Anpressung der Dichtungsmittel (38) gegen die Stützplatte (16) ausgebildet ist.

6. Wegwerffilter (10) nach Anspruch 5, dadurch gekennzeichnet, daß die Dichtungsmittel aus einer flachen Dichtungsscheibe (38) bestehen, aus deren oberer Oberfläche ein Bund (44) heraus und in die Rille (32) hineinragt, wobei der Bund (44) breiter als die Rille (32) ausgebildet ist, so daß sich ein fester Sitz ergibt, so daß die Dichtungsscheibe (38) an dem Gehäuse (14) befestigt bleibt, wenn letzteres von dem Behälter (12) entfernt wird.

7. Wegwerffilter (10) nach Anspruch 6, dadurch gekennzeichnet, daß die flache ringartige Dichtungsscheibe (38) eine von deren unterer Oberfläche nach unten ragende Rippe (40) aufweist, die sich neben der inneren Basis (34) befindet und sich in der Nähe deren innerer Perepherie entlang der Dichtungs scheibe (38) erstreckt.

8. Wegwerffilter (10) nach Anspruch 6 oder 7, dadurch gekennzeichnet, daß die Stützplatte (16) einen größeren Durchmesser aufweist als die Filtermembran (18), so daß sich der äußere Rand der Stützplatte (16) unter der Filtermembran (18) nach außen erstreckt und daß die flache Dichtungsscheibe (38) mit ihrer inneren Umfangsfläche auf der Filtermembran (18) und mit ihrer äußeren Umfangsfläche auf der äußeren Kante der Stützplatte (16) aufliegt.

9. Wegwerffilter (10) nach Anspruch 5, dadurch gekennzeichnet, daß sich auf der Stützplatte (16) eine nach oben erstreckende Lasche (50) befindet, die zur Aufnahme in der Rille (32) angeordnet ist, wobei die Lasche (50) und der obere Abschnitt des Behälters (12) einen Ringraum (52) bilden, wobei sich in diesem Ringraum (52) Dichtungsmittel (54) befinden und die äußere Basis (36) in diesen Ringraum (52) hineinragt, so daß die Dichtungsmittel (54) zwischen dem Gehäuse (14) und der Stützplatte (16) eine luftdichte Abdichtung bilden.

10. Wegwerffilter (10) nach Anspruch 9, dadurch gekennzeichnet, daß die Stützplatte (16) eine sich nach oben erstreckende Lippe (60) aufweist, die mit Abstand von der Lasche (50) angeordnet ist, wobei die Lippe (60) und die Lasche (50) einen Kanal (62) zur Aufnahme der Dichtungsmittel (54) bilden, wobei sich die äußere Basis (36) in den Kanal (62) zur Bildung einer luftdichten Abdichtung zwischen dem Gehäuse (14) und der Stützplatte (4) hineinerstreckt.

11. Wegwerffilter (10) nach Anspruch 10, dadurch gekennzeichnet, daß die Lasche (50) länger ist als die Lippe (60).

12. Wegwerffilter (10) nach Anspruch 10 oder 11, dadurch gekennzeichnet, daß der Kanal (62) mit dem Ringraum (52) zwischen dem oberen Abschnitt des Behälters (12) und der Lasche (50) in Verbindung steht.

## Revendications

1. Filtre jetable (10) pourvu d'une membrane filtrante (18) récupérable et comprenant un réceptacle (12) pour recevoir le filtrat, une plaque-support (16) fixée par assemblage étanche à l'air à l'extrémité supérieure du réceptacle (12) et traversée par une ouverture au moins, une membrane filtrante (18) sur la plaque-support (16), une cuve à extrémités ouvertes (14) pour recevoir le liquide à filtrer, cette cuve (14) comportant une partie d'extrémité inférieure qui pénètre dans l'extrémité supérieure du réceptacle (12) et s'applique contre la plaque-support (16) et la membrane filtrante (18) et des moyens de fermeture hermétique (38) entre l'extrémité inférieure de la cuve (14) et la plaque-support (16), caractérisé par des moyens de séparation par rupture qui relient l'extrémité inférieure de la cuve (14) et l'extrémité supérieure du réceptacle (12) à intervalles espacés autour de la périphérie de ces éléments, moyens qui constituent la seule fixation de la cuve (14) au réceptacle (12) et qui représentent des points faibles de rupture permettant la séparation de la cuve (14) et du réceptacle (12) en vue de la récupération de la membrane filtrante (18).

2. Filtre (10) selon la revendication 1, caractérisé en ce que les moyens de séparation par rupture sont constitués par des nervures verticales (30) qui s'étendent entre la cuve (14) et le réceptacle (12).

3. Filtre (10) selon la revendication 2, caractérisé en ce que l'extrémité supérieure du réceptacle (12) comporte une partie élargie (21) dirigée vers le haut, en ce que l'extrémité inférieure de la cuve (14) comporte une partie rétrécie (24) qui pénètre dans la partie élargie (21) et en ce que les nervures verticales (30) espacées à intervalles autour de la périphérie extérieure de la partie rétrécie (24 sont plus courtes que cette partie rétrécie (24) et sont fixées au bord supérieur de la partie élargie (21) pour unir la cuve (14) au réceptacle (12).

4. Filtre (10) selon la revendication 2 ou 3, caractérisé en ce que les nervures (30) sont formées d'un seul tenant avec la partie d'extrémité inférieure (24).

5. Filtre (10) selon l'une quelconque des revendications 1 à 4, caractérisé en ce que la cuve (14) présente une extrémité inférieure bifurquée formant un pied intérieur (34), un pied extérieur (36) et une gorge intermédiaire (32), le pied intérieur (34) étant disposé de manière à presser la membrane filtrante (18) contre la plaque-support (16) et le pied extérieur (36) étant disposé de manière à presser les moyens de fermeture hermétique (38) contre la plaque-support (16).

6. Filtre (10) selon la revendication 5, caractérisé en ce que les moyens de fermeture hermétique sont constitués par un joint plat (38) qui comporte, en relief sur sa surface supérieure, une bande saillante (44) pénétrant dans la gorge (32), la bande (44) étant plus large que la gorge (32) de manière à s'y encastrer de force, de telle sorte que le joint (38) reste attaché à la cuve (14) lorsque cette dernière est détachée par rupture et séparée du réceptacle (12).

7. Filtre (10) selon la revendication 6, caractérisé en ce que le joint plat annulaire (38) comporte également une nervure (40) qui fait saillie vers le bas sur sa face inférieure, est située au-dessous du pied intérieur (34) et s'étend tout autour du joint (38) à proximité de la périphérie interne de celui-ci.

8. Filtre (10) selon la revendication 6 ou 7, caractérisé en ce que la plaque-support (16) a un diamètre plus grand que la membrane filtrante (18), de telle manière que le bord inférieur de la plaque-support (16) dépasse vers l'extérieur le dessous de la membrane filtrante, et en ce que la périphérie intérieure du joint plat (38) recouvre la membrane filtrante (18) et sa périphérie extérieure recouvre le bord extérieur de la plaque-support (16).

9. Filtre selon la revendication 5, caractérisé par une languette (50) en relief vers le haut sur la plaque-support (16) et disposée de manière à être reçue dans la gorge (32), cette languette (50) et l'extrémité supérieure du réceptacle (12) délimitant entre elles un espace annulaire (52), les moyens de fermeture hermétique (54) se trouvant dans cet espace (52) et le pied extérieur (36) pénétrant dans cet espace (52) et s'appliquant contre les moyens de fermeture hermétique (54) pour former un joint étanche à l'air entre la cuve (14) et la plaque-support (16) (fig. 3).

10. Filtre (10) selon la revendication 9, caractérisé en ce que la plaque-support (16) comporte une lèvre (60) dirigée vers le haut à distance de la languette (50) vers l'extérieur, la lèvre (60) et la languette (50) délimitant entre elles une gouttière (62) pour recevoir les moyens de fermeture hermétique (54), le pied extérieur (36) pénétrant dans cette gouttière (62) pour former un joint étanche à l'air entre la cuve (14) et la plaque-support (16) (fig. 4).

11. Filtre (10) selon la revendication 10, caractérisé en ce que la languette (50) est plus haute que la lèvre (60).

12. Filtre (10) selon la revendication 10 ou 11, caractérisé en ce que la gouttière (62) communique avec l'espace (52) entre l'extrémité supérieure du réceptacle (12) et la languette (50).

FIG. 2

FIG. 1

FIG. 3

FIG. 4